# EUROPEAN PATENT SPECIFICATION

(11) **EP 0 482 676 B1**
(45) Date of publication and mention of the grant of the patent: **28.02.1996**
(21) Application number: 91121830.3
(22) Date of filing: 17.10.1986
(51) Int. Cl.: G03B 42/04

(54) **Radiation image storing panel and method of moving the same in an image recording and read-out apparatus**
Strahlungsbild-Speicherplatte und Verfahren zum Bewegen dieser Platte in einem Bildspeicher- und Auslesegerät
Feuille pour enregistrer une image radiographique et procédé pour transporter la feuille dans un appareil pour enregistrer et lire des images radiographiques

(30) Priority: 18.10.1985 JP 232514/85; 18.10.1985 JP 232515/85; 18.10.1985 JP 232518/85; 19.10.1985 JP 232304/85; 19.10.1985 JP 234187/85
(43) Date of publication of application: 29.04.1992
(62) Divisional of application: 89100661.1
(73) Proprietor: Fuji Photo Film Co., Ltd., Kanagawa-ken (JP)
(72) Inventor: Shimura, Kazuo, c/o Fuji Photo Film Co., Ltd., Kanagawa-ken (JP); Mori, Nobufumi, c/o Fuji Photo Film Co., Ltd., Kanagawa-ken (JP); Saotome, Shigeru, c/o Fuji Photo Film Co., Ltd., Kanagawa-ken (JP); Yoshimura, Ryoichi, c/o Fuji Photo Film Co., Ltd., Kanagawa-ken (JP); Watanabe, Hideo, c/o Fuji Photo Film Co., Ltd., Kanagawa-ken (JP); Hosoi, Yuichi, c/o Fuji Photo Film Co., Ltd., Kanagawa-ken (JP)
(74) Representative: Klunker . Schmitt-Nilson . Hirsch

(56) References cited:
- EP-A- 0 137 674
- EP-A- 0 178 538
- EP-A- 0 179 418

## Description

This invention relates to a radiation image storage panel according to the pre-characterizing part of claim 1 and a method of moving the radiation image storage panel in an image recording and read-out apparatus.

When certain kinds of phosphors are exposed to a radiation such as X-rays, α-rays, β-rays, γ-rays, cathode rays or ultraviolet rays, the store a part of the energy of the radiation. Then, when the phosphor which has been exposed to the radiation is exposed to stimulating rays such as visible light, light is emitted by the phosphor in proportion to the stored energy of the radiation. A phosphor exhibiting such properties is referred to as a stimulable phosphor.

As disclosed in U.S. Patent No. 4,258,264, 4,276,473, 4,315,318 and 4,387,428, and Japanese Unexamined Patent Publication No. 56(1981)-11395, it has been proposed to use a stimulable phosphor in a radiation image recording and reproducing system. Specifically, a sheet comprising the stimulable phosphor (hereinafter referred to as a stimulable phosphor sheet or simply as a sheet) is first exposed to a radiation passing through an object to have a radiation image stored thereon, and is then scanned with stimulating rays which cause it to emit light in proportion to the stored radiation energy. The light emitted by the stimulable phosphor sheet when the sheet is exposed to the stimulating rays is photoelectrically detected and converted into an electric image signal, which is processed as desired to reproduce a visible image having an improved image quality, particularly a high diagnostic efficiency and accuracy. The finally obtained visible image may be reproduced in the form of a hard copy or may be displayed on a cathode ray tube (CRT). In this radiation image recording and reproducing system, the stimulable phosphor sheet is used to temporarily store the radiation image in order to reproduce the final visible image therefrom on a final recording medium. For economical reasons, therefore, it is desirable that the stimulable phosphor sheet be used repeatedly.

Further, in a mobile X-ray diagnostic station such as a traveling X-ray diagnostic station in the form of a vehicle like a bus which is provided with a radiation image recording and read-out apparatus for use in the aforesaid radiation image recording and reproducing system and moves from place to place to record radiation images for mass medical examinations, it is disadvantageous to load the mobile X-ray diagnostic station with a large number of stimulable phosphor sheets, and the number of the stimulable phosphor sheets which can be loaded on the mobile X-ray diagnostic station is limited. Therefore, it is desired to load the mobile X-ray diagnostic station with stimulable phosphor sheets which can be used repeatedly, store the radiation images of the respective objects on the stimulable phosphor sheets, transfer the electric image signals read out from the stimulable phosphor sheets to a recording medium having a large storage capacity, such as a magnetic tape, and circulate and reuse the stimulable phosphor sheets for further image recording and read-out operations, thereby to obtain the radiation image signals of many objects. Further, when image recording is conducted continuously by circulating and reusing the stimulable phosphor sheets, it becomes possible to increase the image recording speed in mass medical examinations. This is very advantageous in practical use.

US-A-8,753,392 discloses a photographic apparatus having a film advancing mechanism for moving film sheets having an extension. This extension forms a reservoir for providing a liquid, which is spread over the image carrying area such that the image is developed. US-A-4,394,581 discloses a panel of the above-mentioned type.

An object of the present invention is to provide a radiation image storage panel suitable for use in the small radiation image recording and read-out apparatus.

This object is achieved by the characterising features of claim 1.

The present invention also provides a method of moving a radiation image storage panel in an image recording and read-out apparatus having the features of claim 6.

With the radiation image storage panel and the method of moving it in accordance with the present invention, since a means for engaging with the movement means is added to the ordinary radiation image storage panel (stimulable phosphor sheet), it is possible to efficiently utilize approximately the entire surface of the stimulable phosphor layer of the panel for radiation image recording. Also, since the radiation image storage panel in accordance with the present invention is moved by engagement with the panel movement means disposed inside of the radiation image recording and read-out apparatus, it is, for example, possible to move the panel with just a pair of rolls without using a complicated conveyance means such as a conveyor belt. Further, since the extension of the panel is formed of a flexible material, the extension may be deformed, for example, bent, when it is not in a state of engagement with the panel movement means such as rolls. Accordingly, it becomes possible to make the panel housing space small as compared with the surface area on one side of the panel, and consequently to minimize the size of the apparatus. Also, since the flexible extension acts in the same manner as a cushioning member for absorbing shock arising at the time of collisions with the conveyance system or surrounding walls, the panel is not affected by such shock. The combination of the radiation image storage panel having the flexible extension with a pair of rolls also facilitates movement of the radiation image storage panel.

### BRIEF DESCRIPTION OF THE DRAWINGS

Figure 1 is a general perspective view showing a radiation image recording and read-out apparatus,
Figure 2 is a perspective view showing the principal parts of the embodiment of Figure 1,
Figures 3 and 4 are sectional side views showing the conditions of the embodiment of Figure 1 during image recording and image read-out,
Figures 5 to 10 are sectional side views showing a part of further details of a radiation image recording and read-out,
Figure 11 is a fragmentary vertical sectional view of a recording and read out apparatus;
Figure 12 is a plan view showing an embodiment of the radiation image storage panel in accordance with the present invention,
Figure 12A is a sectional view taken along line I-I of Figure 12,
Figure 12B is an enlarged view showing the portion in the circle X of Figure 12A, and
Figure 13 is a schematic view showing the radiation image recording and read-out apparatus wherein the method of moving a radiation image storage panel in accordance with the present invention is employed.

### DESCRIPTION OF THE PREFERRED EMBODIMENTS

The present invention will hereinbelow be described in further detail with reference to the accompanying drawings.

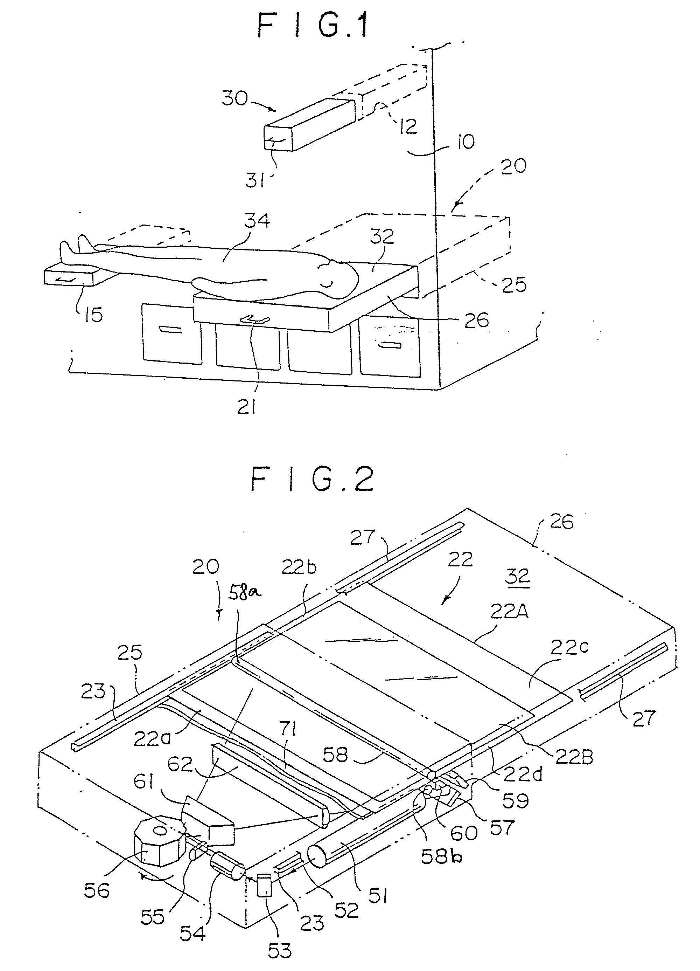

Referring to Figure 1, an radiation image recording and read-out apparatus comprises a main body 20 housed in a wall 10 of a medical examination room of a hospital or the like, and a radiation source housing section 30 adapted for housing in the wall 10. The main body 20 is constituted by a case 25 housing a light shielding cover 26 projectable out of the case 25. When the apparatus is not in use, the light shielding cover 26 is housed in the case 25, i.e. in the wall 10, and the radiation source housing section 30 is housed in a recess 12 in the wall 10. When the apparatus is to be used, the light shielding cover 26 are the radiation source housing section 30 are pulled out of the wall 10 by means of, for example, handles 21 and 31 respectively.

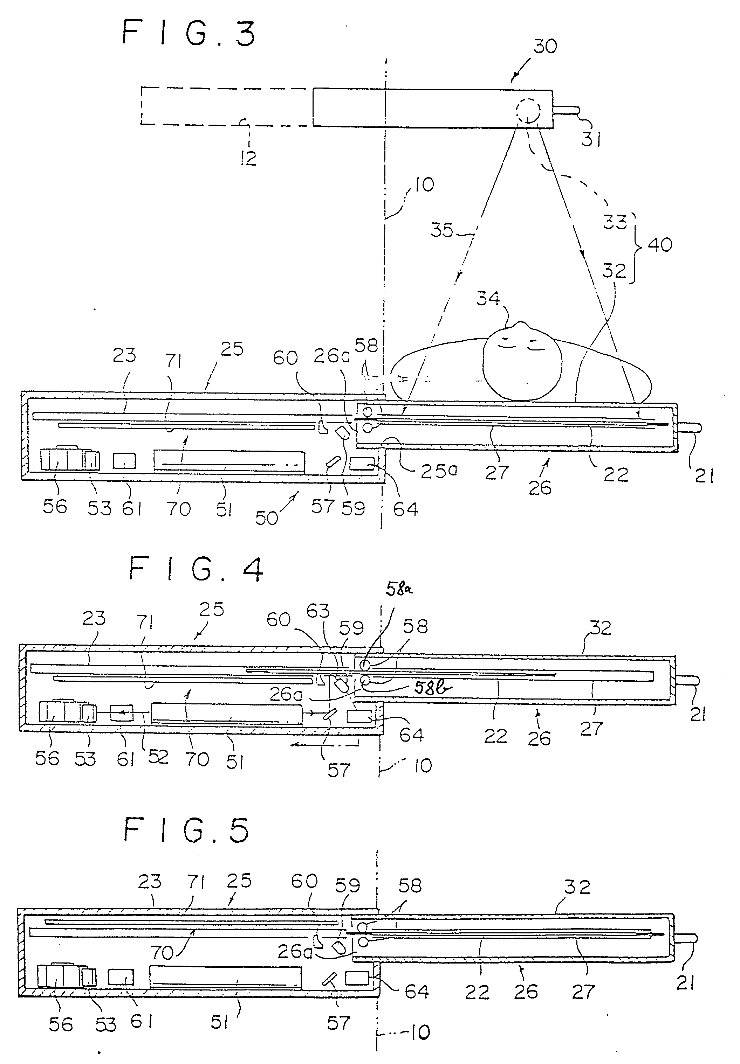

Figure 2 shows the configuration of the main body 20 in detail, and Figure 3 is a sectional side view showing the configuration of the main body 20 and the radiation source housing section 30. A stimulable phosphor sheet 22 comprising a plate-like substrate 22A and a stimulable phosphor layer 22B overlaid on the substrate 22A is disposed inside of the case 25 of the main body 25. The substrate 22A of the stimulable phosphor sheet 22 is formed to be larger than the stimulable phosphor layer 22B, and the portions of the substrate 22A around the stimulable phosphor layer 22B constitute holding portions 22a, 22b, 22c and 22d. In this embodiment, the stimulable phosphor sheet 22 is positioned so that the stimulable phosphor layer 22B comes under the substrate 22A. The holding portions 22b and 22d are slideably supported on rails 23, 23, and the stimulable phosphor sheet 22 is thereby supported inside of the case 25. The length and width of the case 25 are adjusted to be slightly greater than those of the stimulable phosphor sheet 22.

As shown in Figure 3, the case 25 is provided with an opening 25a at an end portion on the side of the wall 10, and the light shielding cover 26 housed in the case 25 is projectable out of the case 25 through the opening 25a. Though the light shielding cover 26 is manually projected out of the case 25 by means of the handle 21 in this embodiment, the light shielding cover 26 may also be moved by a drive device to project it out of the case 25. The light shielding cover 26 is provided with a sheet passage opening 26a at one end portion, i.e. at the end portion on the side supported by the case 25 when the light shielding cover 26 is projected out of the case 25. Therefore, the inside of the light shielding cover 26 is communicated with the inside of the case 25 via the sheet passage opening 26a. When the light shielding cover 26 is housed in the case 25, the stimulable phosphor sheet 22 is positioned inside of the light shielding cover 26.

The upper surface of the light shielding cover 26, i.e. the surface facing the stimulable phosphor sheet 22 from above when the stimulable phosphor sheet 22 is housed in the light shielding cover 26, constitutes an image recording table 32. The radiation source housing section 30 houses a radiation source 33 which may be an X-ray tube or the like and which faces the image recording table 32 as shown in Figure 3 when the radiation source housing section 30 and the light shielding cover 26 are pulled out from the wall 10 in the course of using the apparatus. The case 25 and the portions of the light shielding cover 26 outside of the image recording table 32 are lined with a radiation absorbing material such as a lead plate so that no fogging is produced on the stimulable phosphor sheet 22 by environmental or other such radiations other than the radiation used for image recording.

When a radiation image of an object 34 should be recorded, the object 34 is made to lie, for example, on his back, on the image recording table 32 of the light shielding cover 26 projected out of the wall 10, and the stimulable phosphor sheet 22 is conveyed by drive rollers 58, 58 as described later up to the exposure position facing the image recording table 32 as shown in Figure 3. The radiation source 33 is activated in this condition, and the stimulable phosphor sheet 22 is exposed to a radiation 35 passing through the object 34 to have a radiation image of the object 34 stored thereon, specifically on the stimulable phosphor layer 22B formed on the lower surface side of the stimulable phosphor sheet 22. The stimulable phosphor sheet 22 is supported inside of the light shielding cover 26 by rails 27, 27 which are approximately aligned with the rails 23, 23 of the case 25. Thus in this embodiment, an image recording section 40 is constituted by the image recording table 32 and the radiation source 33. Also, as shown in Figure 1, the legs of the object 34 are supported by a supporting base 15 adapted to be housed in the wall 10.

An image read-out section 50 is provided at a lower section inside of the case 25. The image read-out section 50 is provided with a laser beam source 51, a mirror 53 for reflecting a laser beam 52 emitted as stimulating rays by the laser beam source 51, a beam expander 54 for adjusting the beam diameter of the laser beam 52 to a predetermined value, a cylindrical lens 55 for making the laser beam 52 impinge upon a mirror surface of a light deflector 56 described later so as to form a linear image normal to the rotation axis of the light deflector 56, and the light deflector 56 constituted by a multi-face rotating mirror or the like for reflecting and deflecting the laser beam 52. The image read-out section 50 is also provided with a long mirror 57 for reflecting the deflected laser beam 52 so that the laser beam 52 scans the stimulable phosphor sheet 22, specifically the stimulable phosphor layer 22B, in one direction, and drive rollers 58, 58 acting as a sub-scanning means constituted by a pair of nip rollers for grasping the stimulable phosphor sheet 22 and rotated at a predetermined speed. The image read-out section 50 also comprises a long photomultiplier 59 acting as a photoelectric read-out means and positioned so that the light receiving face extends along the scanning line (main scanning line) of the laser beam 52 on the stimulable phosphor sheet 22, and a long light guide reflection mirror 60 positioned along the long photomultiplier 59. Also, an fθ lens 61 and a cylindrical lens 62 are positioned between the light deflector 56 and the mirror 57, and the laser beam 52 is thereby made to converge to a predetermined beam diameter at every position on the stimulable phosphor sheet 22.

As shown in Figure 4, after the radiation image of the object 34 is stored on the stimulable phosphor sheet 22 as mentioned above, the drive rollers 58, 58 are rotated and the stimulable phosphor sheet 22 is moved at a predetermined speed from the light shielding cover 26 to the case 25. When radiation image recording is conducted, the drive rollers 58, 58 grasp the holding portion 22a at one end of the stimulable phosphor sheet 22. Therefore, when the drive rollers 58, 58 are rotated after image recording is conducted, the stimulable phosphor sheet 22 can be immediately conveyed at mentioned above. Simultaneously with the conveyance of the stimulable phosphor sheet 22, the laser beam source 51 and the light deflector 56 are activated, and the laser beam 52 is made to scan on the sheet 22. As the stimulable phosphor sheet 22 is exposed to the laser beam 52, the exposed portion of the sheet 22 emits light 63 carrying the radiation image stored on the sheet 22. The emitted light 63 is efficiently detected by the long photomultiplier 59 directly or after being reflected by the light guide reflection mirror 60. The scanning of the laser beam 52 in the main scanning direction is conducted as described above, and at the same time the stimulable phosphor sheet 22 is moved in the sub-scanning direction as mentioned above. Accordingly, the emitted light 63, i.e. the radiation image, is two-dimensionally read out of the stimulable phosphor sheet 22. The read-out image signal generated by the long photomultiplier 59 is amplified, digitized and processed by a read-out circuit 64, and then sent to an image reproducing apparatus (not shown) wherein the image signal is used for reproducing a visible radiation image. The image reproducing apparatus may be a display means such as a cathode ray tube (CRT) or an apparatus for light beam scanning recording on a light-sensitive film, or may be replaced by an apparatus for storing the image signal on an image file such as an optical disk or a magnetic disk. Also, the image signal may be sent to a remote position, where there are personnel and instruments for medical examination, through radio communication and used for radiation image reproduction and diagnosis.

As shown in Figure 4, when the stimulable phosphor sheet 22 is moved by the drive rollers 58, 58 in the sub-scanning direction, the sheet 22 passes through the sheet passage opening 26a and moves from the light shielding cover 26 to the case 25. The laser beam 52 scans the sheet 22 at the position near the opening 25a of the case 25. When image read-out is finished, the stimulable phosphor sheet 22 is positioned inside of the case 25. Therefore, it is not necessary to provide the case 25 with a special space for sub-scanning of the sheet 22, it only being necessary that the case 25 is of a size that is slightly larger than the sheet 22.

When image read-out is finished as mentioned above, the holding portion 22c of the stimulable phosphor sheet 22 is gripped between the drive rollers 58, 58 and the sheet 22 is supported by rails 23, 23. An erasing section 70 is provided under the stimulable phosphor sheet 22 in this condition. The erasing section 70 is constituted, by way of example, by a surface type erasing light source 71 which faces the sheet 22 from below. The erasing light source 71 is constituted by, for example, an LED panel or an EL (electroluminescence) plate, and mainly emits light having a wavelength within the stimulation wavelength range for the stimulable phosphor constituting the stimulable phosphor sheet 22. The erasing light source 71 is turned on when image read-out from the sheet 22 is finished. When the sheet 22, specifically the stimulable phosphor layer 22B, is exposed to the erasing light, radiation energy remaining on the sheet 22 after image read-out is released from the sheet 22.

In this manner, the stimulable phosphor sheet 22 on which the image (residual image) has been erased to such an extent that the sheet 22 may be reused for radiation image recording is housed in the case 25. Therefore, it becomes possible to repeat the aforesaid image recording and read-out using the sheet 22. As the erasing light source 71, besides the surface type light source such as the LED panel, it is also possible to use a tungsten-filament lamp, a halogen lamp, an infrared lamp, a xenon flash lamp, a fluorescent lamp or the like as disclosed, for example, in U.S. Patent No. 4,400,619. In the case where such a lamp is used as the erasing light source 71, in order to expose the entire area of the stationary stimulable phosphor sheet 22 in the case 25, a plurality of the lamps may be arrayed side by side, or a rod-like light source may be positioned in the vicinity of the drive rollers 58, 58 therealong for emitting erasing light to the stimulable phosphor sheet 22 conveyed from the case 25 to the light shielding cover 26 before the next radiation image recording is conducted. In the case where residual image erasing is conducted during conveyance of the sheet 22, the substrate 22A of the sheet 22 may be formed of a transparent member, and erasing light may be emitted to the stimulable phosphor layer 22B via the substrate 22A from above the sheet 22.

As shown in Figure 5 when the substrate 22A is formed of a transparent member, the surface type erasing light source 71 may be disposed on the side opposite to the image read-out section 50 with the sheet 22 intervening therebetween. In Figure 5, similar elements are numbered with the same reference numerals with respect to Figures 1 to 4 (this also applies to the other drawings).

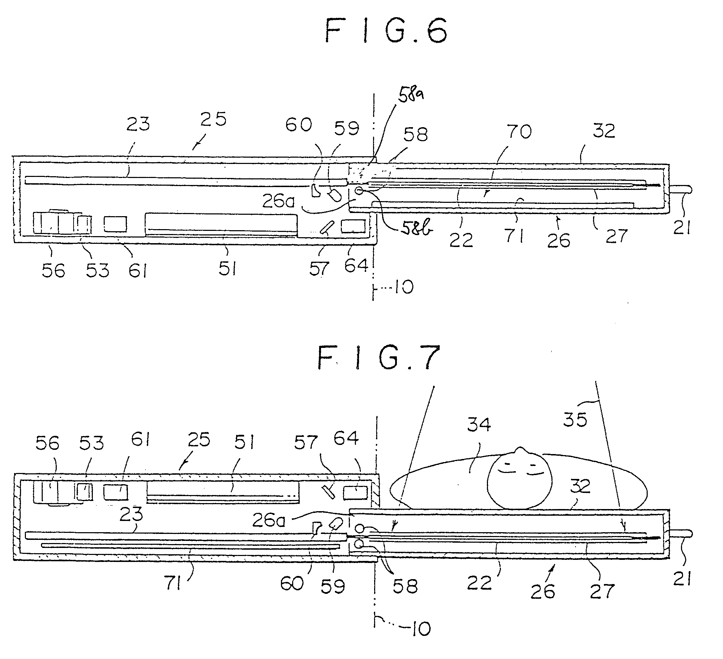

As shown in Figure 6 showing a further radiation image recording and read-out apparatus the erasing light source 71 may be positioned inside of the light shielding cover 26.

For example, in the case where the stimulable phosphor sheet 22 has been maintained for long time in the case 25 without being used for image recording after image (residual image) erasing is conducted on the sheet 22 at the erasing section 70, energy of radiations emitted by radioactive isotopes such as ⁶Ra, which are contained in a trace amount in the stimulable phosphor, or energy of environmental radiations may be stored on the sheet 22 and cause noise in a radiation image recorded next on the sheet 22. However, energy of such radiations is also released (secondary erasing) by exposing the sheet 22 to the erasing light emitted by the erasing light source 71 immediately before the image recording. Also in the case where the surface type light source is used as the erasing light source 71, instead of conducting image (residual image) erasing immediately when the stimulable phosphor sheet 22 is returned into the case 25 after the image read-out is finished, the erasing may be carried out just prior to the next radiation image recording. In this case, it is possible to conduct the residual image erasing and the secondary erasing by a single erasing step. Also, in this case, since radiation energy of the residual image component remaining on the stimulable phosphor sheet 22 is naturally released and decays to some extent, it becomes possible to decrease the erasing light amount for the residual image erasing.

Image read-out is conducted on the side opposite to the radiation exposure side of the stimulable phosphor sheet 22. However, as shown in Figure 7', the laser beam 52 may be emitted from the radiation exposure side of the sheet 22, and the sheet 22 may be positioned so that the stimulable phosphor layer faces the radiation exposure side, thereby conducting the image read-out from the same side as the radiation exposure side. Also, the stimulable phosphor sheet 22 may be quickly returned into the case 25 after the image recording, and may then be conveyed from the case 25 to the light shielding cover 26, and the image read-out may be conducted during said conveyance. In this case, since the stimulable phosphor sheet 22 before the image read-out is quickly retracted from the position facing the image recording table 32, it is possible to prevent fogging of the sheet 22 caused by environmental radiations or the like.

On the other hand, in order to eliminate various influences caused by variations in radiographic exposure conditions and/or to obtain a radiation image having a high image quality or a high diagnostic efficiency and accuracy, it is necessary to investigate such image input conditions of the radiation image stored on the stimulable phosphor sheet 22 as, for example, the level of radiation dose used for image recording, or the image input pattern which is determined by the portion of the object 34 (e.g. the chest or the abdomen of the human body) or the image recording method used, such as plain image recording or contrasted image recording, before reproducing the radiation image as a visible image, and then to adjust the read-out conditions such as the read-out gain and scale factor and/or the image processing conditions in the read-out circuit 64 based on the detected image input conditions or the image input pattern. The image input conditions and the image input pattern will hereinafter be generically referred to as the image input information. Investigation of the image input information may be conducted prior to the visible image reproduction by use of the method as disclosed in Japanese Unexamined Patent Publication No. 58(1983)-67240. In the disclosed method, a read-out operation for detecting the image input information of the radiation image stored on the stimulable phosphor sheet 22 (hereinafter referred to as the preliminary read-out) is conducted in advance by use of stimulating rays having stimulation energy of a level lower than the level of the stimulation energy of stimulating rays used in a read-out operation for obtaining a visible image for viewing, particularly for diagnostic purposes (hereinafter referred to as the final read-out), and thereafter the final read-out is carried out. In the final read-out, the read-out conditions such as the read-out gain and the scale factor are adjusted to appropriate values, and/or an appropriate image processing is conducted, on the basis of the image input information obtained by the preliminary read-out. Also in the aforesaid embodiments, it is possible to easily conduct the preliminary read-out and the final read-out. Specifically, the preliminary read-out is first conducted while the stimulable phosphor sheet 22 is conveyed from the light shielding cover 26 to the case 25, the sheet 22 is then returned into the light shielding cover 26 (at this time, the erasing light source 71 is not turned on), and thereafter the final read-out is conducted while the sheet 22 is conveyed from the light shielding cover 26 to the case 25. Instead of returning the stimulable phosphor sheet 22 to the light shielding cover 26, the sheet 22 may also be conveyed from the case 25 to the light shielding cover 26 after the preliminary read-out is finished, and the final read-out may be conducted during said conveyance.

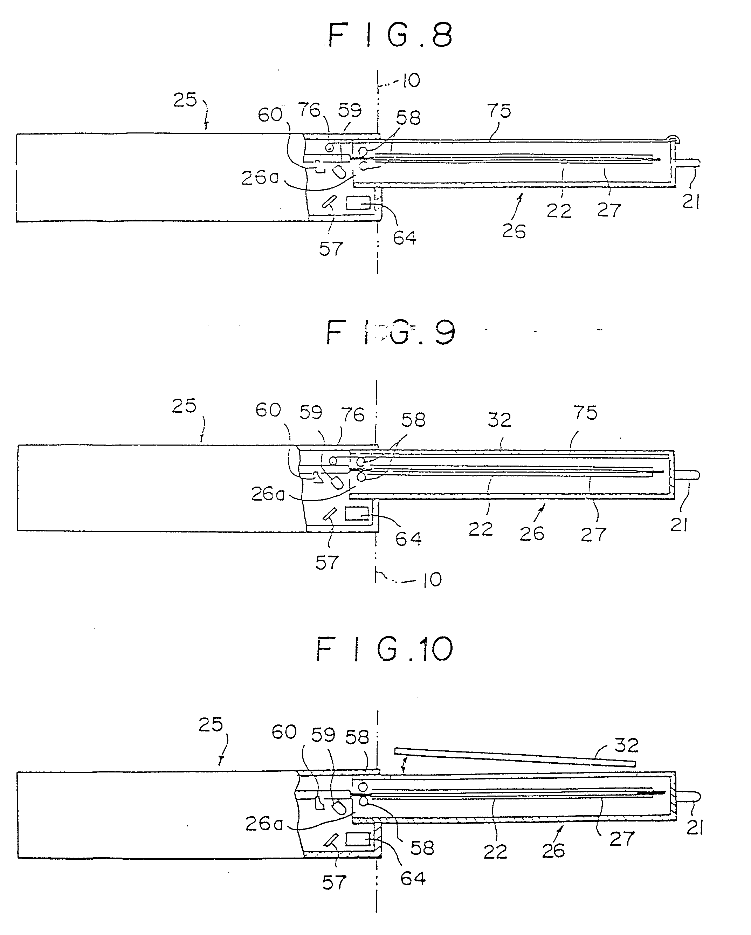

Though the erasing light source 71 is positioned inside of the case 25 or the light shielding cover 26 in the aforesaid embodiments, it is also possible to utilize indoor illumination light as the erasing light. Figures 8, 9 and 10 show such embodiments.

In Figure 8, the upper side of the light shielding cover 26 is opened, and a light shielding screen 75 is positioned at the opened side. The light shielding screen 75 is wound up by a wind-up device 76 inside of the case 25 prior to the radiation image recording to lay the stimulable phosphor sheet 22 bare inside of the light shielding cover 26. The bared sheet 22 is subjected to the residual image erasing and/or the secondary erasing by the indoor illumination light. After the erasing is conducted, the light shielding screen 75 is moved to close the upper side of the light shielding cover 26 so that the sheet 22 is not exposed to ambient light.

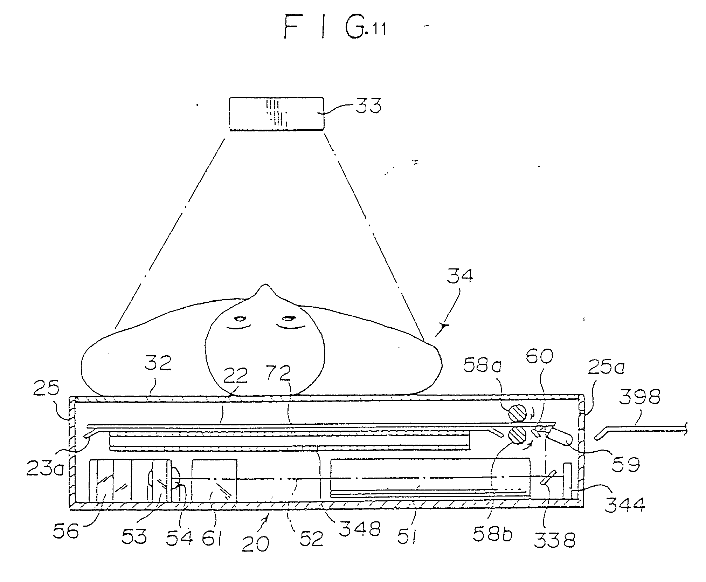

In another embodiment shown in Figure 9, the upper surface of the light shielding cover 26, i.e. the image recording table 32, is formed of a transparent member, and the light shielding screen 75 is positioned between the image recording table 32 and the stimulable phosphor sheet 22. The light shielding screen 75 is wound up and delivered by the wind-up device 76. In this embodiment, it is possible to place an object on the image recording table 32 unlike the embodiment of Figure 8.

In a structure shown in Figure 10, the upper surface of the image recording table 32 acting as the image recording table 32 is mounted removably. In this embodiment, the stimulable phosphor sheet 22 in the light shielding cover 26 is bared by removing the image recording table 32. The bared sheet 22 may then be subjected to the residual image erasing and/or the secondary erasing by the indoor illumination light. In the case where the indoor illumination light is utilized as the erasing light, though it is possible to effect the erasing with just the indoor light, a long time will be taken for the erasing. Therefore, a small-scale erasing light source should preferably be provided in the apparatus, and the erasing should be conducted with the light emitted bv the erasing light source and the indoor light for shortening the erasing time.

When an electric source is turned on, a motor is activated. In this condition, the sheet 22 is gripped at its holding portion 22c between the nip rollers 58a and 58b, as shown in Figure 2, 4 and 6. As shown in Fig. 11, the nip rollers 58a and 58b are rotated in the detections as indicated by the arrows to convey the sheet 22 along guide members 23 into the case 25. When the sheet 22 arrives at the inward ends of the guide members 23, the motor is stopped. As a result, the nip rollers 58a and 58b grip the holding portion 22a of the sheet 22. In this case, when an optical sensor or the like is positioned at the end of the guide member 23a, it is possible to easily detect the arrival of the sheet 22 at the ends of the guide members 23. In this condition, the radiation source 33 is activated to conduct image recording.

After the object 34 leaves the main body 20, the motor is operated to rotate reversely, and the nip rollers 58a and 58b are thereby rotated reversely to the directions of the arrows. At this time, the laser beam source 51 is activated to conduct image read-out. As the sheet 22 is gradually conveyed in the sub-scanning direction towards the opening 25a by being gripped between the nip rollers 58a and 58b, the light emitted by the sheet 22 is detected by the photomultiplier 59. When the holding portion 22c of the sheet 22 arrives at the nip rollers 58a and 58b, the motor 318 is stopped. Thereafter, the motor is again activated to rotate the nip rollers 58a and 58b in the directions as indicated by the arrows, and the sheet 22 projected out of the opening 25a is conveyed along the guide members 23a into the case 25. When the sheet 22 arrived at the inward ends of the guide members 23, the motor is stopped, and the sheet 22 is held at the predetermined position by the nip rollers 58a and 58b and the guide members 23a. The LEDs of an erasing light source are turned on to conduct erasing.

Since the LEDs emit light with high directivity, erasing may become nonuniform. In such a case, for example, the sheet 22 may be swung or vibrated by the nip rollers 58a and 58b to effect uniform erasing.

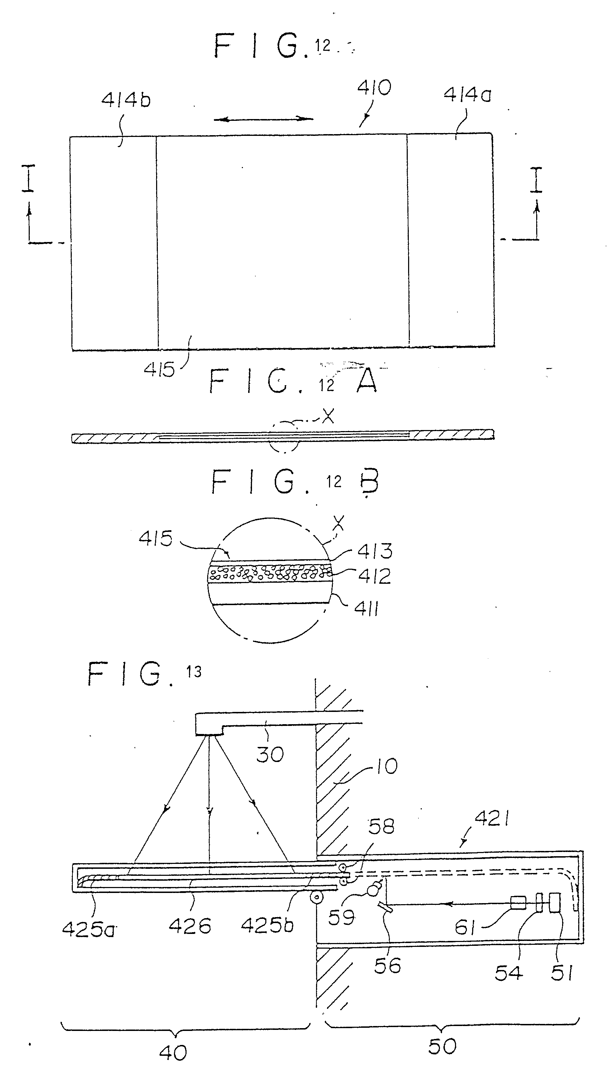

An embodiment of the radiation image storage panel in accordance with the present invention will hereinbelow be described with reference to Figures 12, 12A, 12B and 13.

Referring to Figures 12, 12A and 12B, a radiation image storage panel 410 is constituted by a substrate 411, a stimulable phosphor layer 412 comprising a binder and a stimulable phosphor dispersed therein, and a protective film 413, which are overlaid in this order on the substrate 411. Extensions 414a and 414b are formed on opposite sides of an image forming region (the region of the stimulable phosphor layer 412) as viewed in the movement direction of the radiation image storage panel 410. The extensions 414a and 414b act as portions engaging with the conveyance means such as nip rolls when the radiation image storage panel 410 is moved by being grasped by the conveyance means.

The material cf the extensions 414a and 414b may be selected from flexible resin materials which are used usually, for example, plastic materials such as polyamide, polyethylene, polypropyrene and polyvinyl chloride; synthetic rubber such as urethane rubber, silicone rubber, butyl rubber and chloroprene rubber; and natural rubber.

From the viewpoint of conveyability, strength or the like, the thicknesses of the extensions 414a and 414b should preferably be equal to or slightly smaller than the thickness of the radiation image storage panel 410. Since the extensions 414a and 414b must be flexible, the modulus of elasticity thereof should preferably be 4x10 kg/mm or less.

The length of each of the extensions 414a and 414b should preferably be not less than 0.1 times the length of the stimulable phosphor layer 412 in the movement direction of the radiation image storage panel 410, and more preferably be not less than 0.2 times the length of the stimulable phosphor layer 412 in said direction. When the lengths of the extensions 414a and 414b are adjusted to be comparatively long, it is possible to move the radiation image storage panel 410 smoothly and easily. Though the extension should preferably be provided at both the leading end portion and the rear end portion as viewed in the movement direction of the radiation image storage panel 410, the extension may be formed only at either one of the leading end portion and the rear end portion.

For forming the extension, a material molded to satisfy the aforesaid requirements may be secured to the leading end portion and/or the rear end portion of the panel by use of an adhesive. Or, said material may be secured in advance to the substrate by adhesion, and then the stimulable phosphor layer and the protective film may be formed. Alternatively, a long substrate may be formed, and the stimulable phosphor layer may be applied to the center of the substrate or to one side of the substrate.

An embodiment of the method of moving a radiation image storage panel in accordance with the present invention will now be described with reference to Figure 13.

In Figure 13, a radiation image recording and read-out apparatus 421 is embedded in the wall 10. The apparatus 421 comprises an image recording section 40 and an image read-out section 50. When the image recording section 40 is not used, it is housed inside of the image read-out section 50. The radiation source housing section 30 is also housed inside of the wall 10 when it is not used.

A radiation image storage panel 426 provided with flexible extensions 425a and 425b in accordance with the present invention is positioned inside of the image recording section 40 so that the panel 426 is movable to right and left in Figure 13. The right extension 425b of the radiation image storage panel 426 is grasped between a pair of nip rolls 58, 58 provided at the boundary between the image recording section 40 and the image read-out section 50. In this case, it is only necessary that at least a single pair of the nip rolls 58, 58 be provided so that the panel 426 is moved smoothly. For example, the rolls 58, 58 may be positioned in the vicinity of the forward end portion of the image recording section 40 or in the vicinity of the forward end portion of the image read-out section 50. It is also possible to provide multiple pairs of rolls close to each other or in spaced relation.

After the image recording is conducted, the nip rolls 58, 58 are rotated to move the radiation image storage panel 426 rightwardly until the stimulable phosphor layer of the panel 426 is entirely housed in the image read-out section 50 as indicated by the broken line in Figure 13. Simultaneously with the rightward movement of the radiation image storage panel 426, the read-out mechanism of the image read-out section 50 is activated to conduct the image read-out while the panel 426 is moving rightwardly. Reference numeral 54' denotes a combination of a beam expander and a lens.

Near the end of the image read-out, the right end portion of the radiation image storage panel 426 strikes against the inner wall of the image read-out section 50. However, since the right end portion of the panel 426 is provided with the flexible extension 425b, the extension 425b is bent, normally downwardly, when it contacts the inner wall of the image read-out section 50. Therefore, no shock is generated by collision, and it becomes possible to omit the space for housing the extension 425b.

Thereafter, the radiation image storage panel 426 is moved leftwardly up to the position indicated by the solid line in Figure 13, and operations are repeated in the same manner.

The substrate for the stimulable phosphor layer may be formed of cellulose acetate, a film of a plastic material such as polyethylene terephthalate, a metal sheet such as an aluminium foil, ordinary paper, Baryta paper, resin-coated paper, or the like. The surface of the substrate on which the stimulable phosphor layer is overlaid may be provided with a functional layer such as an adhesion imparting layer, a light reflection layer or a light absorbing layer.

The stimulable phosphor constituting the stimulable phosphor layer may be, for example, a bivalent europium activated alkaline earth metal fluorohalide phosphor represented by the formula M^{II}FX:Eu⁺ wherein M^{II} is at least one alkaline earth metal selected from the group consisting of Mg, Ca and Ba, and X is at least one halogen selected from the group consisting of Cl, Br and I; a europium and samarium activated strontium sulfide phosphor represented by the formula SrS:Eu,Sm; a europium and samarium activated lanthanum oxysulfide phosphor represented by the formula La₂O₂S:Eu,Sm; a europium activated barium aluminum oxide phosphor represented by the formula BaO·Al₂O₃:Eu; a europium activated alkaline earth metal silicate phosphor represented by the formula M⁺O·SiO₂:Eu wherein M⁺ is at least one alkaline earth metal selected from the group consisting of Mg, Ca and Ba; a cerium activated rare earth element oxyhalide phosphor represented by the formula LnOX:Ce wherein Ln is at least one rare earth element selected from the group consisting of La, Y, Gd and Lu, and X is at least one halogen selected from the group consisting of Cl, Br and I; or a bivalent europium activated alkaline earth metal halide phosphor represented by the formula M^{II}XX':Eu⁺ wherein M^{II} is an alkaline earth metal, and each of X and X' is a halogen excluding fluorine.

The transparent protective film is overlaid on the stimulable phosphor layer for physically and chemically protecting the stimulable phosphor layer. The transparent protective film may be formed of, for example, cellulose acetate, polymethyl methacrylate, polyethylene terephthalate, or polyethylene. The thickness of the transparent protective film is usually within the range of approximately 0.1µm to 20µm.

## Claims

1. A radiation image storage panel (22; 410, 420) comprising a substrate (22A; 411) and a stimulable phosphor layer (22B; 412) overlaid on said substrate (22A; 41), said stimulable phosphor layer (22B; 412) containing a binder and a stimulable phosphor dispersed therein,
**characterized by** a flexible extension (22A, 22a, 22c; 414a, 414b; 425a, 425b) of said substrate formed of a flexible material at a leading end portion and/or a rear end portion as viewed in a movement direction of said radiation image storage panel (22; 410, 420), said flexible extension being arranged to be grasped by at least one pair of rolls (58; 58a; 58b) for moving said radiation image storage panel in an image recording and read-out apparatus.

2. A radiation image storage panel as defined in claim 1 wherein the modulus of elasticity of said extension is 4 x 10 kg/mm or less.

3. A radiation image storage panel as defined in claim 1 or 2 wherein the thickness of said radiation image storage panel including said extension is generally uniform.

4. A radiation image storage panel as defined in claim 1 or 2 wherein the length of said extension is not less than 0.1 times the length of said stimulable phosphor layer in the movement direction of said radiation image storage panel.

5. A radiation image storage panel as defined in claim 1 or 2 wherein said extension (22a; 414a, 425a) is formed of a synthetic resin sheet which does not have self-supporting property.

6. A method of moving a radiation image storage panel in an image recording and read-out apparatus, which comprises the steps of:
i) grasping a flexible extension (22a, 22c; 414a, 414b; 425a, 425b) of the radiation image storage panel (22; 410; 420) according to any one of claims 1 - 5 by at least one pair of rolls (58; 58a, 58b) of the image recording and read-out apparatus and
ii) rotating said rolls (58; 58a, 58b) to move said radiation image storage panel.

## Patentansprüche

1. Strahlungsbildspeicherplatte (22; 410, 420), umfassend ein Substrat (22A; 411) und eine über dem Substrat (22A, 411) liegende anregbare Leuchtsstoffschicht (22B; 412), wobei die anregbare Leuchtstoffschicht (22B; 412) einen Binder und einen darin dispergierten anregbaren Leuchtstoff enthält,
**gekennzeichnet durch**
eine flexible Verlängerung (22A, 22a, 22c; 414a, 414b; 425a, 425b) des Substrats, gebildet aus einem flexiblen Material an einem vorderen Endabschnitt und/oder einem hinteren Endabschnitt bei Betrachtung in einer Bewegungsrichtung der Strahlungsbildspeicherplatte (22; 410, 420), wobei die flexible Verlängerung derart ausgestaltet ist, daß sie von mindestens einem Walzenpaar (58; 58a; 58b) ergriffen werden kann, um die Strahlungsbildspeicherplatte in einer Bildaufzeichnungs- und -lesevorrichtung zu bewegen.

2. Strahlungsbildspeicherplatte nach Anspruch 1, bei der der Elastizitätsmodul der Verlängerung 4 x 10 kg/mm oder weniger beträgt.

3. Strahlungsbildspeicherplatte nach Anspruch 1 oder 2, bei der die Dicke der Strahlungsbildspeicherplatte einschließlich der Verlängerung im wesentlichen gleichförmig ist.

4. Strahlungsbildspeicherplatte nach Anspruch 1 oder 2, bei der die Länge der Verlängerung nicht weniger als das 0,1-fache der Länge der anregbaren Leuchtstoffschicht in der Bewegungsrichtung der Strahlungsbildspeicherplatte beträgt.

5. Strahlungsbildspeicherplatte nach Anspruch 1 oder 2, bei der die Verlängerung (22a; 414a, 425a) aus einem Kunstharzblatt gebildet ist, welches keine Eigentragfähigkeit aufweist.

6. Verfahren zum Bewegen einer Strahlungsbildspeicherplatte in einer Bildaufzeichnungs- und -lesevorrichtung, umfassend die Schritte:
i) Ergreifen einer flexiblen Verlängerung (22a, 22c; 414a, 414b; 425a, 425b) der Strahlungsbildspeicherplatte (22; 410; 420) gemäß einem der Ansprüche 1 bis 5 mit mindestens einem Walzenpaar (58; 58a, 58b) der Bildaufzeichnungs- und -lesevorrichtung, und
ii) Drehen der Walzen (58; 58a, 58b), um die Strahlungsbildspeicherplatte zu bewegen.

## Revendications

1. Panneau (22 ; 410, 420) de mémorisation d'une image d'un rayonnement, comprenant un substrat (22A ; 411) et une couche luminescente stimulable (22B ; 412) déposée sur le substrat (22A ; 411), la couche luminescente stimulable (22B ; 412) contenant un liant et une matière luminescente stimulable dispersée dans le liant,
caractérisé par un prolongement souple (22A 22a, 22b ; 414a, 414b ; 425a, 415b) du substrat formé d'un matériau souple à une partie d'extrémité avant et/ou une partie d'extrémité arrière dans la direction de déplacement du panneau (22 ; 410, 420) de mémorisation d'une image d'un rayonnement, le prolongement souple étant destiné à être saisi par au moins une paire de rouleaux (58 ; 58a 58b) destinés à déplacer le panneau de mémorisation de l'image du rayonnement dans un appareil d'enregistrement et de lecture d'images.

2. Panneau de mémorisation d'image d'un rayonnement selon la revendication 1, dans lequel le module d'élasticité du prolongement est inférieur ou égal à 4.10⁶ N/m (4.10 km/mm).

3. Panneau de mémorisation d'image d'un rayonnement selon la revendication 1 ou 2, dans lequel l'épaisseur du panneau de mémorisation d'image d'un rayonnement comprenant le prolongement est uniforme de façon générale.

4. Panneau de mémorisation d'image d'un rayonnement selon la revendication 1 ou 2, dans lequel la longueur du prolongement n'est pas inférieure à 0,1 fois la longueur de la couche luminescente stimulable dans la direction de déplacement du panneau de mémorisation d'image d'un rayonnement.

5. Panneau de mémorisation d'image d'un rayonnement selon la revendication 1 ou 2, dans lequel le prolongement (22a ; 414a 425a) est formé d'une feuille de résine de synthèse qui n'a pas de propriété de cohérence.

6. Procédé de déplacement d'un panneau de mémorisation d'image d'un rayonnement dans un appareil d'enregistrement et de lecture d'images, qui comprend les étapes suivantes :
i) la saisie d'un prolongement souple (22a, 22c 414a, 414b, 425a, 425b) du panneau (22 ; 410 ; 420) de mémorisation d'image d'un rayonnement selon l'une des revendications 1 à 5 à l'aide d'au moins une paire de rouleaux (58 ; 58a, 58b) de l'appareil d'enregistrement et de lecture d'images, et
ii) l'entraînement en rotation des rouleaux (58 ; 58a, 58b) afin que le panneau de mémorisation d'image d'un rayonnement soit déplacé.
